# EUROPEAN PATENT APPLICATION

(11) **EP 3 712 390 A1**
(43) Date of publication of application: **23.09.2020**
(21) Application number: 20158203.8
(22) Date of filing: 19.02.2020
(51) Int. Cl.: F01D 21/04, F02C 7/045

(54) **ACOUSTIC LINER PANEL AND CONTAINMENT FOR A GAS TURBINE ENGINE**

(30) Priority: 19.03.2019 GB 201903716
(71) Applicant: Rolls-Royce plc, London N1 9FX (GB)
(72) Inventor: Evans, Dale, Derby, Derbyshire DE24 8BJ (GB)
(74) Representative: Rolls-Royce plc

(57) **Abstract**

A containment (400, 500) for a gas turbine engine (10), the containment comprising: a plurality of acoustic panels (902) angularly arranged around a central longitudinal axis (9) of the containment, each forming part of an annular acoustic liner (412, 414). Each acoustic panel comprises: a core of cellular material comprising a plurality of elongate cells which are elongate along respective cell directions, wherein each of the elongate cells is circumferentially inclined relative to a local radial direction such that the cell direction has a circumferential component and a radial component relative to the central longitudinal axis; at least one axially-extending panel side wall (904) which is circumferentially inclined relative to a local radial direction such that, in a plane normal to the central longitudinal axis, the panel side wall has a circumferential component and a radial component. Each acoustic panel radially overlaps with another at adjacent panel side walls, with respect to a local radial direction extending through the adjacent panel side walls. Accordingly each acoustic panel is removable from between adjacent overlapping acoustic panels along a removal path which has substantially no axial component.

## Description

### Field of the disclosure

The present disclosure relates to an acoustic panel for an acoustic liner of a gas turbine engine.

### Background

Known containments for gas turbine engines have the dual purposes of preventing ejection of material from a fan of the gas turbine engine, and absorbing noise from the fan. Known containments typically comprise a fan track liner for absorbing impacts (e.g. of debris or an ejected fan blade), together with forward and/or rear acoustic liners. The acoustic liners are typically provided towards a radially-inner gas-washed surface of the containment to absorb the sound, and may include a skin (such as a perforated skin) which defines the radially-inner gas-washed surface of the containment.

### Summary

The present disclosure provides a containment, a gas turbine engine, an acoustic panel, and a method of making an acoustic panel, as set out in the appended claims.

According to a first aspect there is provided a containment for a gas turbine engine, the containment comprising:
a plurality of acoustic panels angularly arranged around a central longitudinal axis of the containment, each forming part of an annular acoustic liner;
wherein each acoustic panel comprises:
   a core of cellular material comprising a plurality of elongate cells which are elongate along respective cell directions, wherein each of the elongate cells is circumferentially inclined relative to a local radial direction such that the cell direction has a circumferential component and a radial component relative to the central longitudinal axis; and
   at least one axially-extending panel side wall which is circumferentially inclined relative to a local radial direction such that, in a plane normal to the central longitudinal axis, the panel side wall has a circumferential component and a radial component;
wherein each acoustic panel radially overlaps with another at adjacent panel side walls, with respect to a local radial direction extending through the adjacent panel side walls; and each acoustic panel is removable from between adjacent overlapping acoustic panels along a removal path which has substantially no axial component.

The local radial direction may be taken as the radial direction intersecting any point of a respective geometrical feature, provided that the definition is consistent comparable respective geometrical features. For example, the local radial direction may be defined as the radial direction that intersects a mid-point of a cell direction (i.e. a midpoint of a vector corresponding to the elongate extent of the cell), or a mid-point of a panel side wall. Otherwise, it may be consistently defined as the radial direction that intersects the radially-innermost point of a respective geometrical feature, or the radially-outermost point of a respective geometrical feature.

The or each panel side wall may have a circumferential extent, for example the or each panel side wall may be helical.

Within each acoustic panel, the circumferential inclination of each cell relative to the respective local radial direction may be in the range of between 20 and 40 degrees, for example between 25 and 35 degrees. A suitable circumferential inclination may correspond to the curvature of the acoustic panel, and so may correspond to the size of a casing. For example, a relatively high circumferential inclination may be appropriate for a relatively small casing (e.g. 1.5-3m in diameter), whereas a relatively low circumferential inclination may be appropriate for larger casing diameters (e.g.3-4.5m).

Within each acoustic panel, the circumferential inclination of each cell relative to the respective local radial direction (i.e. in a plane normal to the central longitudinal axis) may be substantially uniform throughout the angular extent of each panel. In other words, each cell is circumferentially inclined relative a local radial direction by substantially the same amount within a plane normal to the central longitudinal axis

Each panel may have two opposing axially-extending panel side walls, each circumferentially inclined relative to a respective local radial direction such that, in a plane normal to the central longitudinal axis, the panel side wall has a circumferential component and a radial component. For each respective acoustic panel, the circumferential inclination of each panel side wall relative to the respective local radial direction (i.e. in a plane normal to the central longitudinal axis) may be substantially equal.

The circumferential inclination of each panel side wall and each cell may be substantially equal.

Within each acoustic panel, all cells adjacent an axially-extending panel side wall may have an extent along the respective elongate cell direction between opposing ends which terminates at radially-inner and radially-outer walls of the acoustic panel. In other words, the cells adjacent an axially-extending panel side wall have opposing ends which do not terminate at or intersect the axially-extending panel side wall. In other words, none of the cells adjacent an axially-extending panel side wall intersects or terminates at the panel side wall along its elongate extent. Radially-inner and/or radially-outer walls of each acoustic panel may be defined by the ends of the respective cells, or may be defined by a layer enclosing the ends of the respective cells, for example a layer of composite or metal material or other radially-inner or radially-outer skin.

Within each panel, it may be that every cell which is adjacent an axially-extending panel side wall has a radial extent substantially equal to the local radial extent of the respective panel side wall.

It may be that within each panel, all cells at any selected axial location have a substantially uniform depth along their elongate extent. The depth of any cell is its elongate extent along the cell direction.

The containment may further comprise a fan track liner at an axial location corresponding to fan blades of a fan. The plurality of acoustic panels may form part of an annular forward acoustic liner which is axially forward of the fan track liner of the containment; and/or may form part of an annular rear acoustic liner which axially rearward of the fan track liner of the containment.

The containment may further comprise a structural casing formed of composite material having an axial extent greater than the axial extent of the fan track liner so as to at least partially surround a plurality of acoustic panels forming an annular forward acoustic liner. The containment may comprise a forward fence supported on the structural casing and forward of the forward acoustic liner, whereby the forward fence prevents axial removal of acoustic panels of the forward acoustic liner, and an intake may be provided forward of the forward fence further preventing axial removal of the forward fence and forward acoustic liner. The intake may be attached to the structural casing, and when so attached may resist deflection of the forward fence such that in an assembled gas turbine engine, the forward fence provides suitable resistance to projectiles, such as in a fan blade off event.

The structural casing may be substantially cylindrical and coaxial with the central longitudinal axis. In other words, the structural casing may be annular so as to define the central longitudinal axis.

The acoustic liner may be substantially cylindrical or may have a non-uniform profile. For example, at least a radially-inner surface of the acoustic liner may have a non-circular cross section at at least some axial locations. The acoustic liner may be a forward acoustic liner comprising a radially-inner surface having a blended profile from a substantially circular profile at an axially-aft location adjacent the fan track liner to a non-circular profile at an axially-forward location towards an intake location.

According to a second aspect there is provided a gas turbine engine for an aircraft, the gas turbine engine comprising: an engine core comprising a turbine, a compressor, and a core shaft connecting the turbine to the compressor; a fan located upstream of the engine core, the fan comprising a plurality of fan blades; a gearbox that receives an input from the core shaft and outputs drive to the fan so as to drive the fan at a lower rotational speed than the core shaft; and a containment in accordance with the first aspect.

According to a third aspect there is provided an acoustic panel for a containment in accordance with the first aspect or the second aspect, wherein the acoustic panel is configured to form part of an annular acoustic liner arranged around a central longitudinal axis, the acoustic panel comprising:
a core of cellular material comprising a plurality of elongate cells which are elongate along respective cell directions, wherein each of the elongate cells is circumferentially inclined relative to a local radial direction such that the cell direction has a circumferential component and a radial component relative to the central longitudinal axis;
at least one axially-extending panel side wall which is circumferentially inclined relative to a local radial direction such that, in a plane normal to the central longitudinal axis, the panel side wall has a circumferential component and a radial component;
wherein the acoustic panel is configured to radially overlap with an adjacent like acoustic panel at adjacent panel side walls, with respect to a local radial direction extending through the adjacent panel side walls; and
whereby when arranged between like adjacent overlapping acoustic panels, the acoustic panel is removable along a path which has substantially no axial component.

One of a radially-inner and a radially-outer surface of the acoustic panel may have an arcuate profile at at least one axial location, wherein the arcuate profile is coaxial with or defines the central longitudinal axis.

The acoustic panel according to the third aspect may have any of the features of the acoustic panels of the plurality described above with respect to the first aspect.

According to a fourth aspect there is provided a method of making an acoustic panel in accordance with the third aspect for use as one of the plurality of acoustic panels of a containment in accordance with the first aspect, the method comprising the steps of:
cutting a portion of cellular material corresponding to the acoustic panel from a block of cellular material, the portion of cellular material having first and second opposing primary faces, and the portion of cellular material comprising a plurality of cells and being cut from the block so that each cell of the plurality is locally inclined relative to a direction normal to the first face; and
drape forming the portion of cellular material on a forming surface of a tool so that the first face deforms to correspond to the forming surface.

The primary faces may correspond to radially-inner and radially-outer surfaces of the manufactured acoustic panel. The portion of cellular material may be cut from the block so as to additionally comprise only four side faces, and the primary faces may have a surface area greater than any of the four side faces.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C. Purely by way of further example, the cruise conditions may correspond to: a forward Mach number of 0.85; a pressure of 24000 Pa; and a temperature of -54 degrees C (which may be standard atmospheric conditions at 35000 ft).

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figures 4 and 5** are axial cross-sections of example containments of a gas turbine engine;
**Figures 6 and 7** are transverse cross-sections of example acoustic liner arrangements for non-claimed containments;
**Figure 8** is a close-up of an acoustic panel according to the example of Figure 7;
**Figures 9 and 10** are transverse cross-sections of an example acoustic liner arrangement for a containment of the present disclosure; and
**Figure 11** is a flow diagram of a method of manufacturing an acoustic liner panel.

### Detailed Description

Aspects and embodiments of the present disclosure will now be discussed with reference to the accompanying figures. Further aspects and embodiments will be apparent to those skilled in the art.

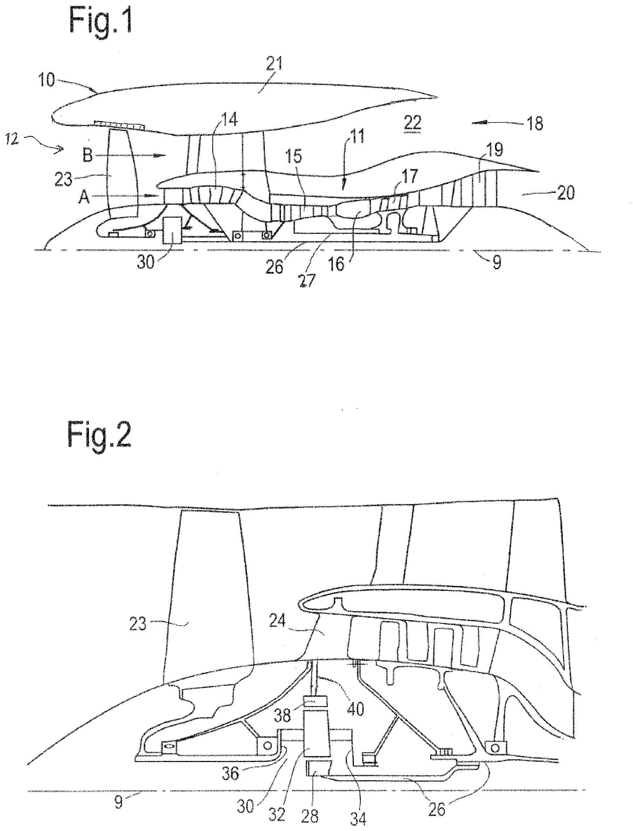

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

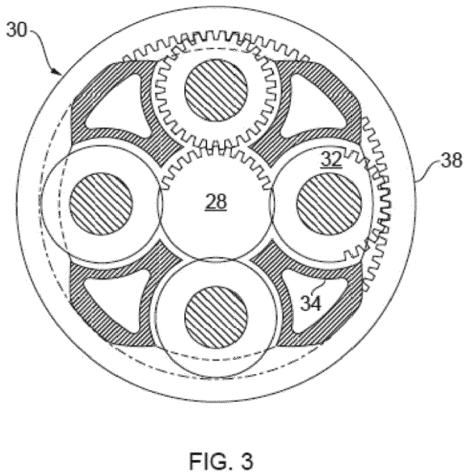

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

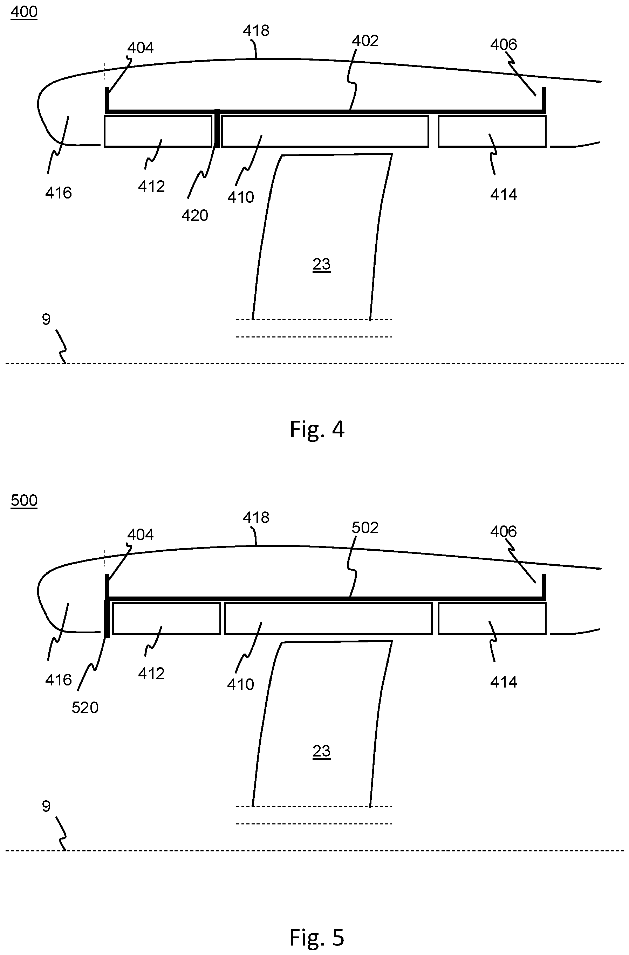

**Figure 4** schematically shows an example containment 400 for a gas turbine engine, which may be a containment of a geared engine as described above with respect to Figures 1-3, or similarly arranged ungeared engine. The containment is shown in longitudinal cross section (i.e. in a plane intersecting the rotational axis 9 of the engine of Figures 1-3), together with a portion of a fan blade. The two parallel broken lines of equal length are used to indicate separation from rotational axis 9. The containment 400 comprises a substantially cylindrical structural casing 402 with forward and aft flanges 404, 406. The containment 400 supports, on its radially-inner side, a fan track liner 410 at an axial location corresponding to a fan 23 of the gas turbine engine, and forward and rear (aft) acoustic liners 412, 414 disposed forwardly and rearwardly of the fan track liner 410 respectively. The containment 400 extends around a central longitudinal axis which in this example is coaxial with the rotational axis 9 of the gas turbine engine (such that reference numeral 9 is used interchangeably herein), but in other examples of the invention the central longitudinal axis may not be coaxial with the rotational axis, for example where there is a handed intake.

The structural casing 402 acts as the primary support structure to which other components of the containment are attached. It is configured to resist penetration of any ejected material (e.g. debris or an ejected fan blade) that may penetrate the fan track liner. The structural casing additionally supports aerodynamic surfaces of the containment which define an intake 416 and the outer surface 418 of a nacelle of the gas turbine engine.

In this example, the containment 400 comprises a forward annular fence 420 which is integral with the structural casing 402 at an axial position between the fan track liner and the forward acoustic liner 412. The forward annular fence 420 is configured to provide a stop to any radially- and forwardly-projecting material from the fan 23. In this example, the casing 402 is formed from metal. As will be appreciated by the skilled person, design and analysis principles for failure-resistant integral formation of load-bearing components at a mid-point of a structural member differ for metallic and composite (e.g. CFRP) materials, such that it is generally more complex to provide such an integral formation or attachment to a composite structural member as compared with a metallic structural member.

Accordingly, in the example containment 400 of Figure 4, the fence 420 is secured to the casing 402 at an axial mid-point (i.e. a point between, but not necessarily centrally between, its two axial ends) forward of the fan blade 23. This arrangement permits service access to the forward acoustic liner by removing the intake 416 (which may be attached to the forward flange of the casing 402), such that panels of the forward acoustic liner can be removed along an axial direction.

**Figure 5** shows an example containment 500 which may have any of the features of the containment 400 but differs in that it has a composite casing 502, and correspondingly the forward annular fence 520 is attached to the casing 502 at its forward end, forward of the forward acoustic liner 412. For example, the forward annular fence 520 may be formed of metal and configured to resist high loads associated with a blade-off event, such that the optimum structural connection point for the forward fence 520 is at a flange at the forward end of the composite casing 502. This is in contrast to the metallic casing 402 of Figure 4, to which a good structural connection can be made rearward of the forward end of the metallic casing 402.

The forward acoustic liner 412 may be attached to the forward annular fence 520 and a rearward support disposed between the forward acoustic liner 412 and the fan track liner 410 (not shown). As will be appreciated, the forward annular fence 520 may be configured to resist significantly higher loads than the rearward support, such that the rearward support may be attached to a mid-point of the casing 502 without causing excessive forces in the event of encountering impacting debris. Similar such supports may be provided either axial side of the rear acoustic liner 414, for example, such supports may be fastened to the casing (e.g. bolted, for example using radially-extending bolts extending through the casing at a position rearward of the fan track liner).

The presence of the intake 416 and the forward annular fence 520 prevents axial access to, and axial withdrawal of, the forward acoustic liner 412. As a significant structural component, it is difficult and complex to remove the intake 416 and/or the forward annular fence 520 when the forward acoustic liner requires servicing. Similarly, supporting and aerodynamic structures may be provided at either axial end of the rear acoustic liner 414, such that axial access to and withdrawal of the rear acoustic liner is prevented, or at least would require the preliminary removal of such components. For example, such components may include the fan track liner 410 forward of the rear acoustic liner 414, and the fan outlet guide vanes (OGVs) and their structural attachment points rearward of the rear acoustic liner 414.

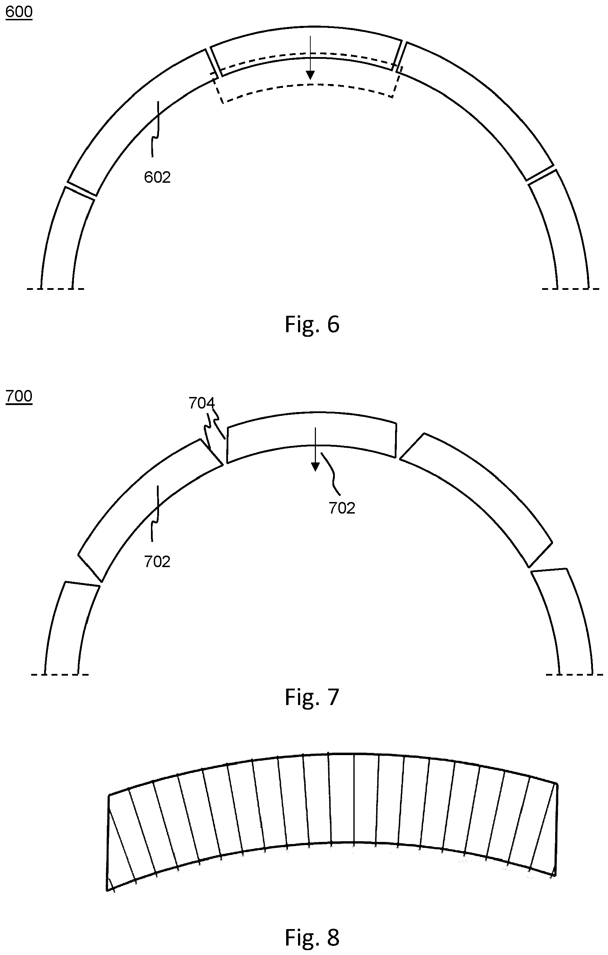

**Figure 6** schematically shows a cross-sectional view of a first example arrangement of acoustic liner panels 602 for an acoustic liner 600, such as for use in the containments 400, 500 of Figures 4 and 5. The cross-sectional view is normal to the central longitudinal axis of the containment.

In this first example arrangement, a plurality of acoustic panels are angularly arranged to form an annular acoustic liner (although only half the annulus is shown). The arrangement is conventional in that the acoustic panels have axially-extending side walls which extend along a radial direction. Such acoustic panels may be formed by draping a cellular material comprising plurality of parallel cells over a drape forming tool, such that the cells are generally aligned with the radial direction in the formed panel. However, when such acoustic panels are fitted close together (as is desirable to avoid dead zones where there is limited noise attenuation), such an arrangement prevents withdrawal of a panel from between two adjacent acoustic panels, as the radially-outer portion is too large to fit through the radially-inner gap between two panels (as illustrated by the broken lines for the top-dead-centre panel intersecting the adjacent panels). Such an arrangement may be suitable for axial removal of the panels only.

**Figure 7** shows an alternative arrangement of acoustic liner panels 702 for an acoustic liner 700 which the applicant has previously considered but not disclosed. In this arrangement, the axially-extending sides 704 of each acoustic panel 702 at each angular end of the panel are truncated (as compared with the axially-extending sides of the liner 600 of Figure 6, which are aligned with the local radial direction at the respective side) so as to be aligned with a removal direction which corresponds to a local radial direction at an angular centre point of the panel. Whilst this permits radial removal of each acoustic panel without intersecting adjacent installed panels, it creates acoustic dead zones between the axially-extending sides of the panels where there is limited or no acoustic attenuation.

Further, such truncation would lead to truncation of individual cells of the acoustic liner, as shown in **Figure 8.** Figure 8 shows an enlarged cross-sectional view of an individual acoustic panel 702 of the liner 700 of Figure 7, including cell boundaries of the cellular material. As shown in Figure 8, the cell boundaries are generally aligned with a local radial direction. However, owing to the truncation at the axially-extending sides of the panel (the "panel side walls"), cells adjacent the panel side walls intersect or terminate at the panel side wall. Accordingly, they have a lower cell depth than cells within the main body of the panel. Since acoustic attenuation is linked with the depth of the cells, such truncated cells have a poor acoustic performance, particularly for low-frequency (large wavelength) noise, such as may be generated by a low-speed fan in a geared turbofan engine.

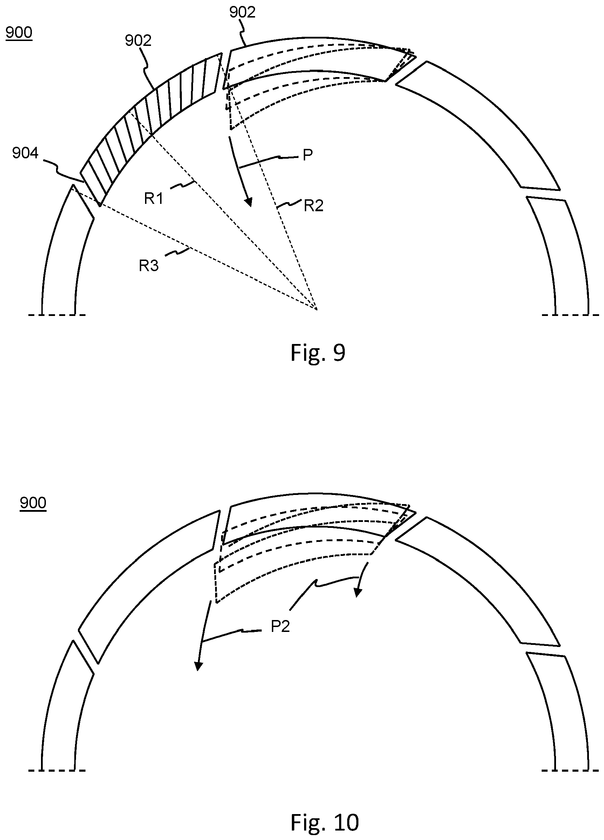

**Figures 9 and 10** show a third example configuration of acoustic liner panels 902 for an acoustic liner 900, which may be used for the acoustic liners 412, 414 of the containments described above with respect to Figures 4 or 5. The acoustic liner 900 is shown in cross-section in a plane normal to a central longitudinal axis of the containment, which may be coaxial with a rotational axis of a gas turbine engine as described above.

In this example, the acoustic panels 902 are angularly arranged around the central longitudinal axis such that each forms part of the annular acoustic liner 900.

Each acoustic panel comprises a core of cellular material comprising a plurality of elongate cells which are elongate along respective cell directions. For clarity, only one of the acoustic panels is shown including such cells. Each of the elongate cells is circumferentially inclined relative to a local radial direction (as can be seen by intersection of a local radial direct R1 with a respective cell wall) such that the cell direction has a circumferential component and a radial component relative to the central longitudinal axis.

At least one (and in this example, both) axially-extending panel side walls 904 are also circumferentially inclined relative to a local radial direction, such that in a plane normal to the central longitudinal axis as shown in Figure 9, the panel side wall has a circumferential component and a radial component.

As shown in Figure 9, each acoustic panel 902 radially overlaps another at adjacent panel side walls, with respect to a local radial direction extending through the adjacent panel side walls 904, such as local radial directions R2 and R3 as shown in Figure 9.

Each acoustic panel is removable from between adjacent overlapping acoustic panels along a removal path which has substantially no axial component - i.e. not requiring axial movement of the respective panel to withdraw it. This is illustrated in Figure 9 by the rotation of the top-dead-centre acoustic panel 902 out of its installed position in a sequence of broken line transitional views, along a removal path P.

In this particular example, the anchor point of rotation is offset from a geometric centre of the acoustic panel towards one axially-extending panel side wall 904 of the acoustic panel - in particular the clockwise-most side of the panel at its radially inner surface. Rotation of the panel about such an offset anchor point has the effect that the angularly-opposing axially-extending panel side wall traces an arc (when considered in cross section). Since that panel side wall is circumferentially inclined, the arc traced by the radially-outer point of the panel approximates the original location of the respective panel side wall better than if the panel side wall were aligned with a local radial direction. Depending on the radial thickness of the panel, the radius of the panel and its angular extent, there may be an optimum circumferential inclination of the panel side wall (and correspondingly the cells) to achieve a close approximation. For example, the circumferential inclination may be between 20 and 40 degrees, for example between 25 and 35 degrees. Since the path of the panel side wall is close to the original position of the panel side wall, a clearance between panels can be significantly reduced such that they can radially overlap and still be removed along a removal path having no axial component.

The removal path need not be purely rotational, and the anchor point could be located away from a point on the panel. For example, Figure 10 shows an alternative removal path P2 for the same acoustic liner 900, which represents a combination of rotation and translation of the acoustic liner panel that enables the paths traced by the axially-extending ends of the panels to more closely approximate their original locations, again permitting a more narrow clearance between adjacent panels.

Features of the above arrangement are associated with a number of particular advantages. The circumferential inclination of the cells permits their depth to be increased without increasing the radial depth of an acoustic liner panel (which would otherwise necessitate increasing the casing diameter and weight). This permits better noise attenuation, particularly of low frequency noise that is associated with the lower rotational speed of a fan in a geared gas turbine engine. Further, the cells adjacent to or defining the axially-extending side walls of the acoustic panels need not be cut to provide the acoustic panel in the desired shape. Such cutting shortens the cell depth and would therefore reduce acoustic performance. Such cutting also requires more manual filling and finishing of an axial side wall, whereas the acoustic panels of the acoustic liner 900 may have axial side walls defined by cell walls (or may be overlaid with another material, such as a filler or layer of composite material). Further, the clearance between adjacent acoustic panels can be minimised whilst still permitting withdrawal along a generally radial path (i.e. towards the central longitudinal axis, rather than on a removal path having an axial component).

In the example acoustic liner 900 of Figures 9 and 10, the circumferential inclination of the cells and the axially-extending side walls is substantially uniform throughout the angular extent of each panel relative to respective local radial directions. However, in variants of this example, the circumferential inclination may vary through the angular extent of the panel, for example if it were found to be geometrically convenient to have two opposing axially-extending side walls of adjacent panels at different circumferential inclinations.

In the example acoustic liner 900 of Figures 9 and 10, all cells within a panel at any selected axial location have a substantially uniform depth along their elongate extent. However, in variants of this example, the depth may vary. For example, it may be that an acoustic liner has a complex geometry to define a non-circular radially-inner surface, and it may be desirable to have variable-depth cells to permit this (e.g. in order to attenuate a wider range of frequencies). In other similar examples, such a complex radially-inner surface may be formed with uniformly deep cells, and there may be a variable-depth space or spacer between a radially-outer surface of the acoustic liner and a casing to which it is attached. The blend of a highly 3D intake air washed surface into a 2D fan front face may drive such a variation in the outer annulus.

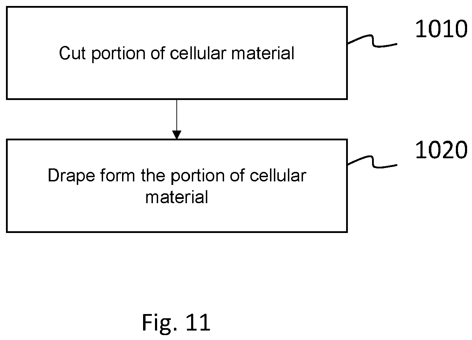

**Figure 11** is a flow diagram of a method of making an acoustic panel 902 as described above with respect to Figure 9, for use as one of the plurality of acoustic panels of a containment 500 as described above with respect to Figures 4 or 5.

A block of cellular material is provided comprising a plurality of cells, which may be arranged in side-by-side parallel relationship. In block 1010, a portion of cellular material corresponding to the acoustic panel is cut from the block, the portion being cut so that it has first and second opposing primary faces (i.e. the largest faces of the portion by surface area) The portion is cut from the block so that each cell of the plurality within the portion is locally inclined relative to a direction normal to the first primary face.

In block 1020, the portion of cellular material is drape formed on a forming surface of a tool so that the first face deforms to correspond to the forming surface. For example, the forming surface may be curved, for example to correspond to the profile of a radially-inner or radially-outer surface of a formed acoustic panel.

The portion of cellular material may then be provided as an acoustic panel, or may undergo further manufacturing steps, for example assembling into a pre-form with a skin of composite material, for example to form a bonded sandwich with an inner perforated composite (e.g. CFRP, GFRP) skin and an outer non-perforated composite skin.

Although the invention is equally applicable to gas turbine engines with and without a gearbox, gas turbine engines with a gearbox typically result in the fan operating at lower speed, such that the important noise frequencies to attenuate with an acoustic liner may be lower than for a gas turbine engine without a gearbox. Since acoustic liners with deeper cells have better performance in attenuating lower frequency noise, it is particular advantageous to provide containment arrangements which permit cell depth to be increased, as per the invention.

Although examples described herein refer to circumferential inclination of the cells in an acoustic liner and acoustic liner panel, it will be appreciated that such cells may additionally be inclined axially - i.e. such that the vector of the cell direction incudes radial, axial and circumferential components.

It will be understood that the invention is not limited to the embodiments above-described and various modifications and improvements can be made without departing from the concepts described herein within the scope of the following claims.

## Claims

1. A containment (400, 500) for a gas turbine engine (10), the containment comprising:
a plurality of acoustic panels (902) angularly arranged around a central longitudinal axis (9) of the containment, each forming part of an annular acoustic liner (412, 414);
wherein each acoustic panel (902) comprises:
a core of cellular material comprising a plurality of elongate cells which are elongate along respective cell directions, wherein each of the elongate cells is circumferentially inclined relative to a local radial direction such that the cell direction has a circumferential component and a radial component relative to the central longitudinal axis; and
at least one axially-extending panel side wall (904) which is circumferentially inclined relative to a local radial direction such that, in a plane normal to the central longitudinal axis, the panel side wall has a circumferential component and a radial component;
wherein each acoustic panel (902) radially overlaps with another at adjacent panel side walls (904), with respect to a local radial direction extending through the adjacent panel side walls; and each acoustic panel is removable from between adjacent overlapping acoustic panels along a removal path which has substantially no axial component.

2. The containment of claim 1, wherein within each acoustic panel, the circumferential inclination of each cell relative to the respective local radial direction is substantially uniform throughout the angular extent of each panel.

3. The containment of claim 1 or 2, wherein each panel has two opposing axially-extending panel side walls, each circumferentially inclined relative to a respective local radial direction such that, in a plane normal to the central longitudinal axis, the panel side wall has a circumferential component and a radial component;
wherein for each respective acoustic panel, the circumferential inclination of each panel side wall relative to the respective local radial direction is substantially equal.

4. The containment of claim 2 or 3, wherein the circumferential inclination of each panel side wall and each cell is substantially equal.

5. The containment of any preceding claim, wherein within each acoustic panel, all cells adjacent an axially-extending panel side wall have an extent along the respective elongate cell direction between opposing ends which terminates at radially-inner and radially-outer walls of the acoustic panel.

6. The containment of any preceding claim, wherein within each panel, every cell which is adjacent an axially-extending panel side wall has a radial extent substantially equal to the local radial extent of the respective panel side wall.

7. The containment of any preceding claim, wherein within each panel, all cells at any selected axial location have a substantially uniform depth along their elongate extent.

8. The containment of any preceding claim, further comprising a fan track liner (410) at an axial location corresponding to fan blades of a fan (23);
wherein the plurality of acoustic panels form part of an annular forward acoustic liner (412) which is axially forward of the fan track liner of the containment; and/or
wherein the plurality of acoustic panels form part of an annular rear acoustic liner (414) which is axially rearward of the fan track liner of the containment.

9. The containment of claim 8, further comprising:
a structural casing (502) formed of composite material having an axial extent greater than the axial extent of the fan track liner so as to at least partially surround a plurality of acoustic panels forming an annular forward acoustic liner; and
a forward fence (520) supported on the structural casing and forward of the forward acoustic liner (412), the forward fence preventing axial removal of acoustic panels of the forward acoustic liner.

10. A gas turbine engine (10) for an aircraft, the gas turbine engine comprising:
an engine core (11) comprising a turbine (19), a compressor (14), and a core shaft (26) connecting the turbine to the compressor;
a fan (23) located upstream of the engine core, the fan comprising a plurality of fan blades;
a gearbox (30) that receives an input from the core shaft (26) and outputs drive to the fan so as to drive the fan at a lower rotational speed than the core shaft; and
a containment (400, 500) in accordance with any one of the preceding claims.

11. An acoustic panel (902) for a containment (400, 500) in accordance with any one of claims 1 to 9, wherein the acoustic panel is configured to form part of an annular acoustic liner (900) arranged around a central longitudinal axis (9), the acoustic panel comprising:
a core of cellular material comprising a plurality of elongate cells which are elongate along respective cell directions, wherein each of the elongate cells is circumferentially inclined relative to a local radial direction such that the cell direction has a circumferential component and a radial component relative to the central longitudinal axis; and
at least one axially-extending panel side wall (904) which is circumferentially inclined relative to a local radial direction such that, in a plane normal to the central longitudinal axis, the panel side wall has a circumferential component and a radial component;
wherein the acoustic panel is configured to radially overlap with an adjacent like acoustic panel at adjacent panel side walls (904), with respect to a local radial direction extending through the adjacent panel side walls; and
whereby when arranged between like adjacent overlapping acoustic panels, the acoustic panel is removable along a path which has substantially no axial component.

12. The acoustic panel of claim 11, wherein one of a radially-inner and a radially-outer surface of the acoustic panel has an arcuate profile at at least one axial location, wherein the arcuate profile is coaxial with or defines the central longitudinal axis (9).

13. A method of making an acoustic panel (902) of claim 11 or 12 for use as one of the plurality of acoustic panels of a containment (400, 500) of any one of claims 1 to 9, the method comprising the steps of:
cutting a portion of cellular material corresponding to the acoustic panel from a block of cellular material, the portion of cellular material having first and second opposing primary faces, and the portion of cellular material comprising a plurality of cells and being cut from the block so that each cell of the plurality is locally inclined relative to a direction normal to the first face; and
drape forming the portion of cellular material on a forming surface of a tool so that the first face deforms to correspond to the forming surface.
